# FASCICULE DE BREVET EUROPEEN

(11) **EP 2 478 277 B1**
(45) Date de publication et mention de la délivrance du brevet: **07.08.2013**
(21) Numéro de dépôt: 10770575.8
(22) Date de dépôt: 16.09.2010
(51) Int. Cl.: F16K 11/07, F16K 31/04, F25C 3/04

(54) **VANNE POUR LA DISTRIBUTION D'EAU ET D'AIR DANS LES INSTALLATIONS DE PULVERISATION D'EAU SOUS PRESSION**
VENTIL ZUR AUSGABE VON WASSER UND LUFT BEI WASSERSPRÜHANLAGEN UNTER DRUCK
VALVE FOR DISPENSING WATER AND AIR IN INSTALLATIONS THAT SPRAY WATER UNDER PRESSURE

(30) Priorité: 17.09.2009 FR 0904446
(43) Date de publication de la demande: 25.07.2012
(73) Titulaire: MYNEIGE SAS, 69570 Dardilly (FR)
(72) Inventeur: JOUNEAU, Pierrick, F-44119 Treillieres (FR); DAVID, Eric, F-44119 Treillieres (FR); GALVIN, Michel, F-44470 Carquefou (FR)
(74) Mandataire: Coralis Harle
(86) Numéro de dépôt international: PCT/FR2010/051928
(87) Numéro de publication internationale: WO 2011/033226

(56) Documents cités:
- WO-A1-02/061516
- WO-A1-03/019059
- FR-A1- 2 573 854
- FR-A1- 2 795 494
- JP-A- 5 322 063

## Description

La présente invention concerne une vanne adaptée pour la distribution d'eau et d'air, apte à équiper les installations de pulvérisation d'eau sous pression, en particulier pour la fabrication de neige artificielle (ou neige de culture).

Les installations actuelles d'enneigement artificiel intègrent de nombreuses avancées technologiques qui ont permis d'améliorer leur efficacité et leur rendement par une meilleure utilisation des conditions climatiques.

C'est notamment le cas des dispositifs de pulvérisation équipant ces installations d'enneigement, pour la fabrication de neige de culture, qui peuvent fonctionner avec des débits en eau et en air fortement différents pour mieux profiter des conditions climatiques.

Cette régulation des débits est habituellement mise en oeuvre au moyen de vannes adaptées pour la distribution d'eau et d'air, équipant les circuits d'alimentation connectés à ces dispositifs de pulvérisation.

Une vanne de ce type couramment employée dans les installations d'enneigement est décrite par exemple dans le document FR-2 573 854.

Cette vanne consiste en un dispositif en forme de distributeur à tiroir, connecté aux conduites d'alimentation en eau et en air de l'installation. Un tiroir cylindrique unique est manoeuvré en coulissement au sein d'une chambre ménagée dans le corps de vanne, pour contrôler l'écoulement des flux d'eau, d'air et de vidange.

Bien qu'elle soit particulièrement intéressante et efficace, cette vanne a cependant l'inconvénient de ne comporter qu'une vidange unique, ménagée sur son circuit d'eau en aval de la fermeture. L'eau éventuellement présente dans le circuit d'air est alors susceptible, par grand froid, d'occasionner un gel du dispositif de pulvérisation situé en aval ; un autre inconvénient est la possibilité de passage d'eau dans l'air en cas de défaillance des joints puisque le forage est commun aux deux circuits.

On connaît également des vannes qui présentent un caractère universel, adaptées pour la distribution d'eau, ou éventuellement d'air, dans les installations de pulvérisation d'eau sous pression.

De telles vannes, par exemple décrites dans le document FR-2 795 494, sont en pratique efficaces et d'usage flexible ; mais elles sont relativement encombrantes lorsqu'elles sont associées, et obligent une gestion indépendante des circuits d'eau et d'air qui s'avère relativement complexe.

De plus, cela multiplie les organes de commande et les composants associés, notamment connectique hydraulique et électrique, avec les conséquences économiques qui en découlent.

Par ailleurs, avec l'augmentation de la taille des réseaux d'enneigement, de nouvelles problématiques apparaissent :
- le réseau d'air peut piéger par endroits des quantités d'eau importantes ; cette eau peut constituer un risque de gel majeur des enneigeurs,
- le réseau d'eau peut également contenir de l'air susceptible de perturber la régulation des vannes.
Aucun des deux systèmes précités ne permet de répondre efficacement aux problématiques concernant la purge des circuits, c'est-à-dire le nettoyage des circuits amont à l'ouverture de la vanne, et concernant la vidange qui élimine le fluide contenu dans le circuit aval à la fermeture de la vanne.

La présente invention propose ainsi une vanne pour la distribution d'eau et d'air, de structure compacte et économique tout en permettant un contrôle efficace des débits aval en fluides. Cette vanne autorise encore une vidange des deux circuits et elle permet aussi de préférence une purge des circuits (en particulier du circuit d'air).

Pour cela, la vanne conforme à l'invention est caractérisée par le fait qu'elle comprend : d'une part, un corps muni de deux circuits indépendants pour la circulation chacun d'un fluide, l'un d'air et l'autre d'eau, lesquels circuits comportent chacun : (i) une chambre dans laquelle est logé un obturateur en forme de tiroir, (ii) un canal pour l'entrée du fluide, entrant dans ledit corps par un orifice amont et connecté à ladite chambre par un orifice aval, (iii) un canal pour la sortie du fluide, connecté à ladite chambre par un orifice amont et débouchant dudit corps par un orifice aval, et (iv) un canal en communication avec ledit canal de sortie, ou apte à venir en communication avec ce dernier, muni d'un orifice amont et débouchant (avantageusement au niveau de l'extrémité inférieure de la chambre associée) par un orifice aval, afin notamment de permettre la vidange du fluide contenu dans ledit canal de sortie,
et d'autre part, des moyens pour la commande desdits obturateurs disposés et guidés dans leur chambre respective, chacun entre :
- une position ouverte, dans laquelle ledit canal d'entrée est en communication avec ledit canal de sortie via une zone de passage de ladite chambre, et dans laquelle ledit canal de vidange est obturé, et
- une position fermée, dans laquelle ladite zone de passage (et avantageusement l'orifice aval du canal d'entrée et/ou l'orifice amont du canal de sortie) est obturée par ledit obturateur associé, et dans laquelle le canal de vidange est ouvert,
et en ce que lesdits moyens de commande comportent - une motorisation unique, pour la manoeuvre desdits obturateurs, et - une structure assurant la liaison mécanique entre les deux obturateurs, pour assurer une manoeuvre simultanée desdits deux obturateurs au sein de leur chambre respective.

Selon une forme de réalisation particulière, la motorisation coopère avec l'un des obturateurs, et la structure de liaison relie mécaniquement l'extrémité supérieure des deux obturateurs pour assurer leurs manoeuvres simultanées.

Selon encore une caractéristique, la vanne est structurée de sorte que les obturateurs sont aptes à être manoeuvrés selon une configuration dans laquelle l'obturateur du circuit d'air se situe dans sa position ouverte alors que l'obturateur du circuit d'eau est dans sa position fermée.
Elle est également structurée de sorte que la manoeuvre des obturateurs en position ouverte permet de réguler le débit et de contrôler la pression d'au moins l'un des fluides.

Selon une autre particularité, la vanne selon l'invention comporte un canal sur son circuit d'air, et/ou un canal sur son circuit d'eau, apte(s) à coopérer avec l'obturateur du circuit correspondant pour réaliser une purge de l'eau dans l'air, ou de l'air dans l'eau, selon le cas, des canalisations amont, avant de réaliser l'ouverture desdits circuits d'air et/ou d'eau.

Toujours selon une autre caractéristique, le canal de vidange du circuit d'air est ménagé dans le corps de vanne, en dehors de l'encombrement de la chambre associée, de sorte que son orifice amont débouche dans le canal de sortie dudit circuit d'air, et que son orifice aval débouche au niveau de l'extrémité inférieure de ladite chambre ; et l'obturateur dudit circuit d'air est manoeuvrable par les moyens de commande dans une position intermédiaire, située entre les positions fermée et ouverte, dans laquelle, d'une part, ledit canal d'entrée est en communication avec le canal de sortie via la zone de passage de la chambre associée et, d'autre part, le canal de vidange est ouvert, pour permettre en particulier une opération active de purge du circuit d'air lors de l'ouverture dudit circuit d'air.

Encore selon une autre caractéristique, le canal de sortie du circuit d'air comporte une partie formant chicane, comportant une chambre en deux parties, l'une amont et l'autre aval, séparées par une cloison transversale munie d'un orifice traversant décalé vers le haut par rapport à l'orifice d'entrée de ladite partie amont, laquelle partie aval de la chambre se prolonge, en partie haute, par l'orifice aval du circuit d'air et comporte, en partie basse, l'orifice amont du canal de purge/vidange.
Ce canal de sortie du circuit d'air en chicane a pour intérêt de permettre une séparation des condensats contenus dans l'air.

Par ailleurs, le canal de vidange du circuit d'eau est avantageusement ménagé dans l'obturateur dudit circuit d'eau, au niveau de son extrémité inférieure, lequel canal de vidange comporte un orifice aval débouchant en regard de l'extrémité inférieure de la chambre associée, et un orifice amont débouchant dans la zone de passage de fluide de ladite chambre, lequel canal de vidange est ouvert ou fermé, selon la position dudit obturateur, au moyen d'un bouchon ménagé au niveau de l'extrémité inférieure de ladite chambre.

De préférence, pour le circuit d'eau, l'orifice aval du canal d'entrée se situe au-dessous de l'orifice amont du canal de sortie ; d'autre part, pour le circuit d'air, l'orifice aval du canal d'entrée se situe au-dessus de l'orifice amont du canal de sortie.

La présente invention concerne également un procédé de mise en oeuvre d'au moins une vanne pour la distribution d'eau et d'air dans les installations de pulvérisation d'eau sous pression en vue de la fabrication de neige artificielle par exemple, laquelle ou lesquelles vannes comportent chacune :
d'une part, un corps muni desdits circuits indépendants pour la circulation chacun d'un fluide, l'un d'air et l'autre d'eau, lesquels circuits comportent chacun (i) une chambre dans laquelle est logé un obturateur en forme de tiroir, (ii) un canal pour l'entrée du fluide, entrant dans ledit corps par un orifice amont et connecté à ladite chambre par un orifice aval, (iii) un canal pour la sortie du fluide, connecté à ladite chambre par un orifice amont et débouchant dudit corps par un orifice aval, et (iv) un canal pour la vidange en communication avec ledit canal de sortie, ou apte à venir en communication avec ce dernier, muni d'un orifice amont et débouchant par un orifice aval, afin de permettre notamment la vidange du fluide contenu dans ledit canal de sortie,
et d'autre part, des moyens pour la commande desdits obturateurs disposés et guidés dans leur chambre respective, chacun entre :
   - une position ouverte, dans laquelle ledit canal d'entrée est en communication avec ledit canal de sortie via une zone de passage de ladite chambre, et dans laquelle ledit canal de vidange est obturé, et
   - une position fermée, dans laquelle ladite zone de passage est obturée par ledit obturateur associé, et dans laquelle le canal de vidange est ouvert,
lesdits obturateurs du circuit d'air et/ou du circuit d'eau étant également manoeuvrables dans une position intermédiaire, située entre lesdites positions fermée et ouverte, dans laquelle, d'une part, le canal d'entrée est en communication avec le canal de sortie via ladite zone de passage de la chambre associée et, d'autre part, le canal de vidange est ouvert,
lequel procédé consiste à mettre en oeuvre la succession d'étapes suivantes, partant d'une position fermée pour les deux circuits de fluide :
   a) déplacement en position intermédiaire de l'un au moins des obturateurs, pour réaliser une purge du circuit correspondant,
   b) déplacement en position ouverte uniquement de l'obturateur du circuit d'air, pour assurer l'alimentation en air, et ensuite
   c) déplacement en position ouverte de l'obturateur du circuit d'eau, pour assurer l'alimentation en eau,
lesquelles étapes sont mises en oeuvre selon un ordre inversé pour assurer le retour en position fermée desdits deux obturateurs, lors de l'arrêt de l'alimentation en eau et en air.

Dans une forme de réalisation particulière, les obturateurs du circuit d'air et du circuit d'eau sont tous les deux manoeuvrables dans une position intermédiaire pour réaliser une purge des deux circuits ; dans ce cas, la position intermédiaire de l'obturateur du circuit d'eau est avantageusement atteinte avant la position intermédiaire de l'obturateur du circuit d'air.

Dans le cas où la vanne est structurée de sorte que la position des obturateurs permet de réguler le débit et de contrôler la pression en fluide, la position des obturateurs en configuration ouverte, et le temps de maintien de ladite position, sont avantageusement dépendants de la valeur mesurée de pression et/ou de débit en fluide, ou des informations fournies par un capteur de présence d'eau dans le canal de sortie.

L'invention sera encore illustrée, sans être aucunement limitée, par la description suivante d'un mode de réalisation particulier, en relation avec les dessins annexés dans lesquels :
- la figure 1 est une vue en élévation d'une vanne selon l'invention ;
- la figure 2 est une vue de dessus de la vanne représentée sur la figure 1 ;
- la figure 3 est une vue en coupe de la vanne des figures 1 et 2, selon le plan de coupe vertical III-III de la figure 1 passant par l'axe de l'obturateur du circuit d'eau (ici en position ouverte) ;
- la figure 4 est une vue en coupe de la vanne des figures 1 et 2, selon le plan de coupe vertical IV-IV de la figure 1 passant par l'axe de l'obturateur du circuit d'air (ici en position ouverte) ;
- la figure 5 est une vue en coupe de la vanne des figures 1 et 2, selon le plan de coupe vertical V-V de la figure 2, passant par l'axe des obturateurs des circuits d'air et d'eau (ici en position fermées) ;
- la figure 6 est une vue partielle et légèrement agrandie de la figure 5, montrant en détail les éléments constitutifs du circuit d'eau ;
- la figure 7 est une vue partielle et en détail de la figure 5, montrant ici les éléments constitutifs du circuit d'air ;
- les figures 8 à 11 illustrent la cinématique mise en oeuvre pour le passage des obturateurs des circuits d'air et d'eau depuis leur position fermée jusqu'à leur position ouverte.

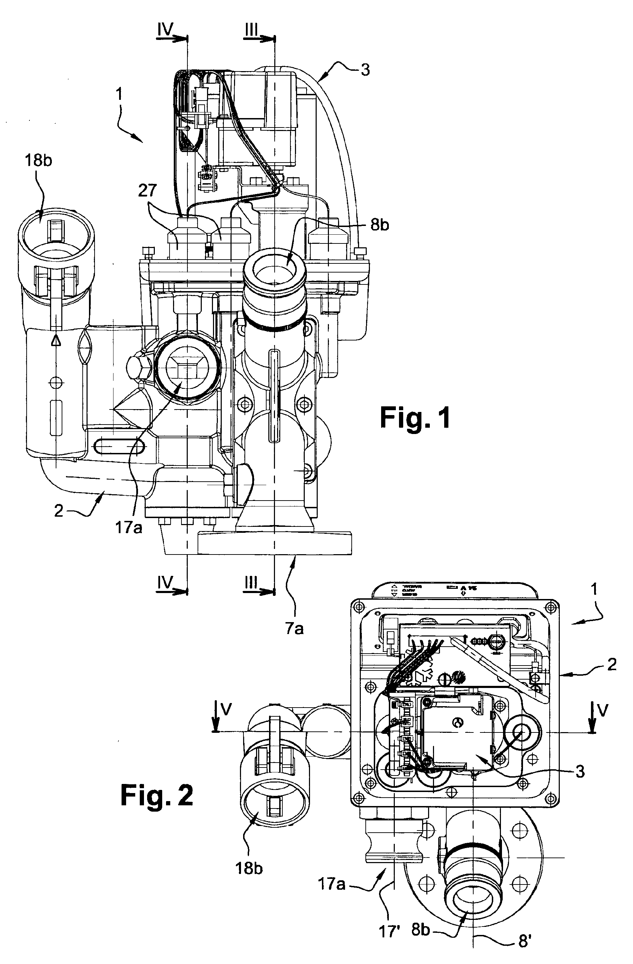

La vanne 1 selon l'invention, telle que représentée de manière générale sur les figures 1 à 5, est particulièrement adaptée pour équiper les installations de pulvérisation d'eau sous pression, notamment les installations d'enneigement (enneigeurs) en vue de la fabrication de neige artificielle.

Dans le cas de telles installations d'enneigement, la vanne 1 est avantageusement implantée dans des abris qui sont répartis le long de la piste à enneiger ; et elle est apte à raccorder, d'une part, des alimentations générales amont en eau et en air sous pression, sous forme de canalisations disposées le long de la piste et provenant d'une salle des machines renfermant les groupes motopompes et moto-compresseurs, et d'autre part, les conduites aval associées aux dispositifs de pulvérisation (par exemple sous forme de canons à neige).

Cette vanne 1 comprend un corps 2, ici en forme générale de bloc parallélépipédique et compact, surmonté par des moyens de commande 3.

Le corps de vanne 2 est par exemple réalisé en aluminium ; il est obtenu avantageusement par assemblage de plusieurs parties moulées.

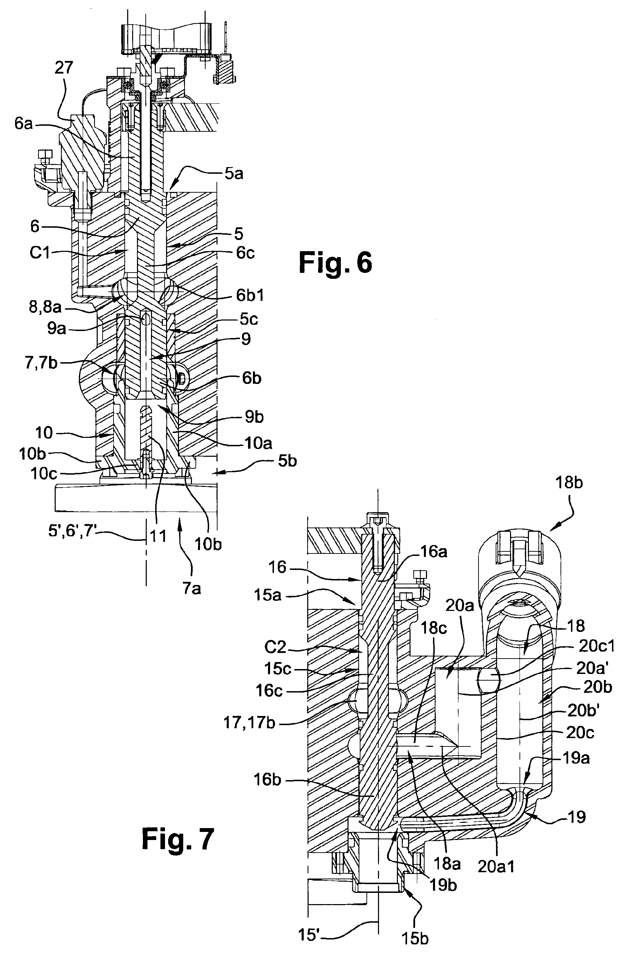

Ce corps de vanne 2 est muni de deux circuits indépendants C1 et C2, qui sont chacun adaptés pour la circulation d'un fluide :
- un premier circuit C1, représenté en détail et de manière isolée sur la figure 6, permet une circulation d'eau sous pression, et
- un second circuit C2, représenté en détail et de manière isolée sur la figure 7, est destiné à canaliser de l'air sous pression.
Pour faciliter la suite de la description, on emploie les termes « amont » et « aval », tenant compte du sens de cheminement normal du fluide dans les circuits C1 et C2 correspondants.

Le circuit d'eau C1, tel que représenté en particulier sur la figure 6, comprend une chambre 5 qui lui est propre, dans laquelle est logé et guidé un obturateur mobile 6 détaillé plus loin.

La chambre 5 consiste en un orifice traversant, de forme générale cylindrique, ménagé sur la hauteur du corps de vanne 2 et centré sur un axe 5'. Elle comporte deux extrémités axiales 5a et 5b, débouchant respectivement vers le haut et vers le bas lors de la mise en oeuvre de la vanne 1.

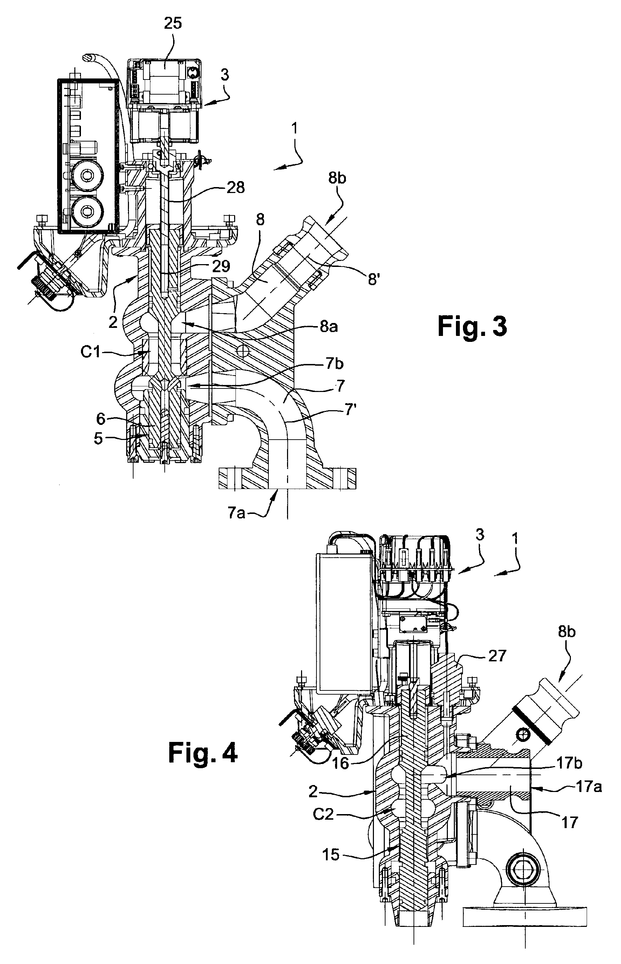

Ce circuit C1 comprend également trois canaux 7, 8 et 9 pour le cheminement de l'eau au sein de la chambre 5 :
- un canal 7 pour l'entrée ou l'alimentation en eau, délimité par un orifice amont 7a d'entrée dans le corps de vanne 2 et un orifice aval 7b (ici en forme de volute) débouchant dans la chambre 5 (figures 3 et 6),
- un canal 8 pour la sortie de l'eau, délimité par un orifice amont 8a (ici en forme de volute) débouchant dans la chambre 5 (figures 3 et 6) et un orifice aval 8b sortant dudit corps de vanne 2, et
- un canal 9 pour la vidange, délimité par un orifice amont 9a et un orifice aval 9b, décrit plus en détail par la suite.

L'extrémité amont 7a du canal d'alimentation 7 est destinée à être connectée, de manière étanche, à l'alimentation générale de l'installation à équiper (non représentée) ; l'orifice aval 8b du canal de sortie 8 est quant à lui connectable à l'enneigeur, de manière étanche, avantageusement au moyen d'une tuyauterie souple.

Les canaux d'entrée 7 et de sortie 8 débouchent dans la chambre 5 de telle sorte que l'orifice aval 7b du canal d'entrée 7 se situe ici au-dessous de l'orifice amont 8a du canal de sortie 8. Cette caractéristique est en particulier utile lors des opérations de vidange, tel que décrit par la suite.

La partie intermédiaire 5c de la chambre 5 qui s'étend entre les deux orifices 7b et 8a constitue, lorsqu'elle n'est pas fermée par l'obturateur 6, la zone de circulation d'eau au sein de ladite chambre 5 (en l'occurrence selon un sens ascendant).

Pour optimiser la vidange gravitaire du circuit aval, l'axe 8' du canal de sortie 8 est incliné vers le haut, dans le sens de sa sortie, par exemple selon une pente de 45°.

L'obturateur 6 précité consiste en une pièce allongée monobloc, formant tiroir, apte à coulisser longitudinalement dans la chambre 5.

Cet obturateur 6 comporte en particulier deux parties cylindriques, l'une supérieure 6a et l'autre inférieure 6b, reliées par une tige monobloc centrale 6c.
Les deux parties cylindriques 6a et 6b ont un même diamètre, correspondant au jeu près à celui de la chambre de guidage 5. Elles sont munies de joints toriques pour assurer l'étanchéité du circuit d'eau C1.
La tige 6c présente quant à elle un diamètre de l'ordre de la moitié de celui des parties cylindriques 6a et 6b précitées.

Ces parties cylindriques supérieure 6a et inférieure 6b sont chacune guidées dans une partie de la chambre 5, respectivement du côté de son extrémité supérieure 5a et de son extrémité inférieure 5b.

En l'occurrence, la partie cylindrique inférieure 6b de l'obturateur 6 est guidée en regard de l'orifice aval 7b du canal d'alimentation 7, pour former une sorte de soupape et réguler le débit d'eau en sortie du circuit C1 au niveau du canal de sortie 8.

Cette partie cylindrique inférieure 6b de l'obturateur 6 est plus précisément guidée dans une douille ou chemise 10, rapportée au niveau de l'extrémité inférieure 5b de la chambre 5 (constituant ainsi son extrémité inférieure).

Cette chemise 10 comporte une partie tubulaire cylindrique 10a qui s'insère dans le corps de vanne 2, sur une partie de la hauteur de la chambre 5.

Une collerette inférieure 10b permet de fixer cette chemise 10 à la partie inférieure du corps de vanne 2 ; le fond 10c de cette chemise 10 comporte encore des orifices (non visibles sur les figures du fait du plan de coupe) qui permettent l'évacuation de l'eau lors de la vidange comme détaillé par la suite.

La partie inférieure cylindrique 6b de l'obturateur 6 comporte une extrémité supérieure 6b1 en forme de tronc de cône, convergent du bas vers le haut.
Ce profil à section variable est destiné à permettre un réglage du débit en coopération avec le profil 5c de la chambre 5, et un contrôle de la pression, entre le canal d'entrée 7 et le canal de sortie 8.

Le canal de vidange 9 est ménagé directement dans l'obturateur 6.
Ce canal de vidange 9 se présente ici sous la forme d'un alésage ménagé dans la partie cylindrique inférieure 6b de l'obturateur 6, centré sur l'axe 6' dudit obturateur.
Son orifice amont 9a se situe du côté de l'extrémité supérieure 6b1 de la partie cylindrique inférieure 6b. Il se présente sous la forme d'un conduit oblique, relié à la chambre 5.
Son orifice aval 9b est quant à lui orienté du côté de la chemise de vidange 10, c'est-à-dire encore du côté de l'extrémité inférieure 5b de la chambre 5.

Le fond 10c de la chemise 10 comporte un bouchon 11, en forme de tige ou de doigt, qui s'étend coaxialement par rapport à la chambre 5, à l'obturateur 6 et au canal de vidange 9. Ce bouchon 11, muni d'un joint torique à son extrémité (non représenté sur les figures), est destiné à obturer le canal de vidange 9 lorsque l'obturateur 6 est manoeuvré en position ouverte, comme développé ci-après. A l'inverse, en position normale de fermeture de la vanne 1, le bouchon 11 est séparé du canal 9 ce qui permet une vidange automatique du circuit d'eau C1.

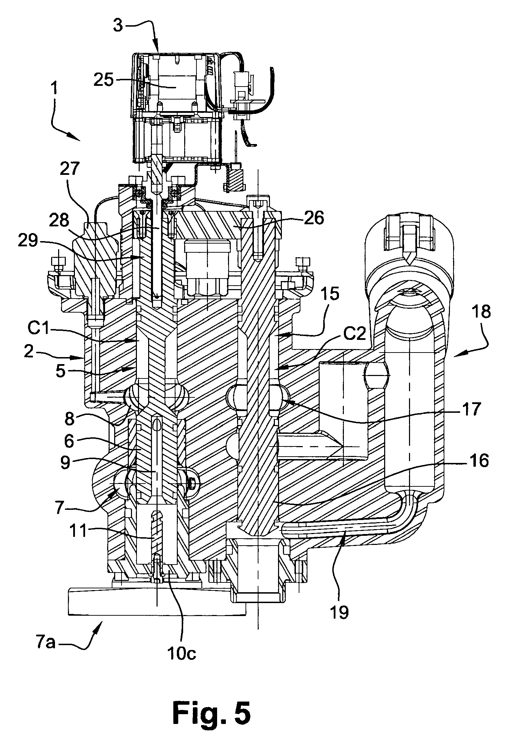

Le circuit d'air C2, représenté de manière isolée sur la figure 7, est similaire au circuit d'eau C1 tel que décrit ci-dessus en relation avec les figures 5 et 6 (hormis son système original de purge/vidange).

On retrouve en particulier une chambre 15 dans laquelle est logé et guidé un obturateur 16.

Là encore, la chambre 15 consiste en un orifice traversant de forme générale cylindrique, ménagé sur la hauteur du corps de vanne 2 et centré sur un axe 15'.

Cette chambre 15 comporte deux extrémités axiales débouchantes 15a et 15b, destinées à être orientées respectivement vers le haut et vers le bas lors de la mise en oeuvre de la vanne 1.

Les axes 5' et 15' des deux chambres 5 et 15 du corps de vanne 2 s'étendent parallèlement l'un par rapport à l'autre.

Le circuit C2 comporte également les trois canaux pour le cheminement de l'air au travers de sa chambre 15 :
- un canal 17 pour l'entrée ou l'alimentation en air, délimité par un orifice amont 17a d'entrée dans le corps de vanne 2 et par un orifice aval 17b (ici en forme de volute) débouchant dans la chambre 15,
- un canal 18 pour la sortie d'air, délimité par un orifice amont 18a (ici en forme de volute) débouchant au sein de la chambre 15 (figure 7) et un orifice aval 18b sortant du corps de vanne 2 (figures 2 et 7), et
- un canal de purge/vidange 19, également délimité par un orifice amont débouchant 19a et un orifice débouchant aval 19b.

L'extrémité amont 17a du canal d'alimentation 17 est destinée à être connectée, de manière étanche, à l'alimentation générale de l'installation à équiper (non représentée) ; l'orifice aval 18b du canal de sortie 18 est quant à lui connectable à l'enneigeur, de manière étanche, avantageusement au moyen d'une tuyauterie souple.

Les canaux d'entrée 17 et de sortie 18 du circuit d'air C2 débouchent dans la chambre 15 de sorte que l'orifice aval 17b du canal d'entrée 17 se situe au-dessus de l'orifice amont 18a du canal de sortie 18.
La partie intermédiaire 15c de la chambre 15, s'étendant entre ces deux orifices 17b et 18a, constitue la zone de circulation d'air au sein de ladite chambre 15 (en l'occurrence ici selon un sens descendant), si elle n'est pas fermée par l'obturateur 16.

Le canal de sortie 18 s'étend approximativement dans un plan qui est orienté perpendiculairement au plan défini par l'axe de la chambre 15 et par l'axe 17' du canal d'entrée 17.
De plus, les orifices d'entrée 17a et de sortie 18b du circuit d'air C2 se situent d'un même côté du corps de vanne 2, et ils sont centrés sur des axes qui s'étendent dans des plans verticaux parallèles.

Le canal de sortie 18 du circuit d'air C2 est encore particulier en ce qu'il comporte une partie formant chicane, prévue pour séparer et extraire les condensats contenus dans l'air.

Ce canal de sortie 18 comporte pour cela une chambre 20 composée de deux parties, l'une amont 20a et l'autre aval 20b (tenant compte du sens de cheminement normal de l'air dans ce canal 18), séparées par une cloison transversale 20c.
Ces parties amont 20a et aval 20b de la chambre 20 présentent chacune une forme générale cylindrique, et elles sont centrées chacune sur des axes 20a' et 20b' parallèles l'un par rapport à l'autre et par rapport à l'axe de chambre 15'.
Cette chambre 20 est encore munie d'un ensemble d'orifices convenablement ménagés pour modifier la direction d'écoulement de l'air ; en particulier la cloison transversale 20c est ici munie d'un orifice traversant 20c1 qui est décalé vers le haut par rapport à l'orifice d'entrée 20a1 de la partie amont 20a. Cet orifice d'entrée 20a1 correspond à l'extrémité d'un petit canal d'alimentation 18c qui provient de l'orifice amont 18a, l'axe de ce canal 18c s'étendant perpendiculairement à l'axe 15' de la chambre 15.
De manière avantageuse, ces orifices 20a1 et 20c1 de la chambre 20 sont centrés sur des axes parallèles l'un par rapport à l'autre, et décalés en hauteur. Ces orifices 20a1 et 20c1 sont de plus orientés perpendiculairement par rapport à la paroi en regard, respectivement une paroi amont de la cloison 20c et une paroi aval de la chambre aval 20b, cette disposition permettant d'arrêter les micro-gouttes d'eau entraînées par l'air.

De plus, la partie aval 20b de la chambre 20 comporte - un orifice supérieur, centré sur son axe 20b', qui aboutit à l'orifice aval 18b du canal de sortie 18, et - un orifice inférieur, également centré sur son axe 20b', qui correspond à l'orifice amont 19a du canal de purge/vidange 19.

Contrairement au circuit d'eau C1 décrit ci-dessus, le canal de purge/vidange 19 du circuit d'air C2 est ménagé directement dans le corps de vanne 2, en dehors de l'encombrement de la chambre cylindrique 15 associée.

Ce canal de purge/vidange 19 est ici ménagé de sorte que :
- son orifice amont 19a débouche dans le canal de sortie 18 du circuit d'air C2, comme décrit ci-dessus, et
- son orifice aval 19b débouche au niveau de l'extrémité inférieure 15b de la chambre 15.

L'obturateur 16 de ce circuit d'air C2 est quant à lui similaire à celui 6 décrit ci-dessus dans le cadre du circuit d'eau C1. Il est en forme de tiroir mobile comportant deux parties cylindriques 16a et 16b reliées par une tige monobloc 16c.

Là encore, les deux parties cylindriques 16a et 16b ont un même diamètre, correspondant au jeu près à celui de la chambre 15. Elles sont également munies de joints toriques pour assurer l'étanchéité du circuit d'air C2.
Ces parties cylindriques supérieure 16a et inférieure 16b sont chacune guidées dans une partie de la chambre 15, respectivement du côté de l'extrémité supérieure 15a et de l'extrémité inférieure 15b de cette dernière.

La tige 16c a un diamètre correspondant environ à la moitié de celui des parties cylindriques 16a et 16b précitées.

La partie inférieure cylindrique 16b de l'obturateur 16 constitue une soupape destinée à se déplacer au niveau :
- de l'orifice amont 18a du canal de sortie 18, de façon à permettre un réglage du débit, et un contrôle de la pression, en sortie du circuit C2, et
- de l'orifice aval 19b du canal du purge/vidange 19, pour obtenir les positions ouverte et fermée de ce dernier.

Le profil de l'extrémité supérieure de la partie inférieure 16b de l'obturateur 16 peut être réalisé à section variable pour optimiser le réglage de débit et le contrôle de la pression précités.

Par ailleurs, les moyens de commande 3 de la vanne 1 sont structurés pour assurer une manoeuvre simultanée ou synchrone des deux obturateurs 6 et 16, au sein de leur chambre respective 5 et 15.

Tel que représenté en particulier sur la figure 5, on peut voir que ces moyens de commande 3 comportent à cet effet principalement deux éléments :
- une motorisation unique 25, pour la manoeuvre des obturateurs 6 et 16, et
- une structure 26 assurant la liaison mécanique entre les deux obturateurs 6 et 16.

La motorisation unique 25, par exemple constituée par un motoréducteur électrique, est bridée sur la face supérieure du corps de vanne 2 et elle est protégée par une structure de capotage.
Cette motorisation 25 peut être à vitesse variable et à contrôle de position (motoréducteur de type brushless par exemple) ; elle est associée à des moyens de pilotage adaptés, convenablement configurés (notamment, le contrôle de la vitesse et de la position peut permettre de gérer le temps que dure chaque phase de la séquence décrite ci-après).

Pour son fonctionnement, la vanne 1 est encore avantageusement équipée de différents capteurs de pression 27, qu'ils soient d'air ou d'eau. Ces capteurs de pression sont ici en communication avec les canaux d'alimentation 7 et 17, et les canaux de sortie 8 et 18 des deux circuits C1 et C2.

Le corps de vanne 2 comporte encore des orifices qui permettent le passage des fils d'alimentation et/ou de commande.

Cette vanne 1 comporte également des dispositifs de fin de course, associés à différents composants qui permettent son fonctionnement et le recueil de paramètres liés à ce fonctionnement.

Les moyens de pilotage peuvent être programmés de sorte que la position des obturateurs 6 et 16 soit asservie à la valeur d'une grandeur physique mesurée, par exemple la pression et/ou le débit en eau et/ou en air, ou encore la présence d'eau (détectée par un capteur approprié, par exemple au sein de la chambre 20). Le temps de maintien sur une des positions (décrites par la suite) peut ainsi être dépendant de la valeur de l'une au moins desdites grandeurs physiques mesurées.

Selon le présent mode de réalisation, l'organe moteur 25 entraîne une vis 28 en rotation autour de son axe, laquelle vis 28 coopère avec un alésage interne fileté 29 ménagé axialement au sein de la partie supérieure cylindrique 6a de l'obturateur 6 équipant ici le circuit d'eau C1.

La structure de liaison mécanique 26, entre les deux obturateurs 6 et 16, consiste quant à elle en une sorte de plateau, solidarisé par tout moyen approprié (vissage par exemple) avec l'extrémité supérieure de la partie cylindrique 6a et 16a constitutive des obturateurs 6 et 16.

De la sorte, la course en translation appliquée à l'obturateur 6 du circuit d'eau C1 par la motorisation 25 correspond ici précisément et en permanence à la course de l'obturateur 16 équipant le circuit d'air C2. Ainsi, étant donné la structure du corps de vanne 2 et des obturateurs 6 et 16, l'ouverture du circuit d'air se fait avant celle du circuit d'eau.

En pratique et selon l'invention, les moyens de commande 3 assurent le déplacement en coulissement des deux obturateurs 6 et 16 dans leurs chambres cylindriques 5 et 15 respectives, cela chacun entre :
- une position ouverte (figures 3, 4 et 11), dans laquelle les canaux d'entrée 7 et 17 sont en communication avec les canaux de sortie associés 8 et 18, via les zones intermédiaires de chambres 5c et 15c, et dans laquelle les canaux de vidange 9 et 19 sont obturés, et
- une position fermée (figure 5), dans laquelle les zones intermédiaires de chambres 5c et 15c sont obturées par les obturateurs 6 et 16 associés, et dans laquelle les canaux de sortie 8 et 18 sont en communication avec les canaux respectifs de vidange 9 et 19 ouverts.

Plus précisément, en position fermée, tel que représenté sur la figure 5, les obturateurs 6 et 16 des deux circuits C1 et C2 sont en position haute dans leur chambre respective 5 et 15. Dans cette position de fermeture, les circuits d'eau C1 et d'air C2 sont fermés :
- la partie inférieure cylindrique 6b de l'obturateur 6 du circuit d'eau C1 obture l'orifice aval 7b du canal d'entrée 7, et
- la partie inférieure cylindrique 16b de l'obturateur 16 du circuit d'air C2 bouche l'extrémité amont 18a de son canal de sortie 18.
Toujours dans cette position de fermeture, l'eau de l'installation en aval de la vanne peut s'écouler par simple gravité au travers du canal de vidange 9 qui est ouvert (le bouchon 11 étant hors du canal de vidange 9), et s'évacuer par les orifices ménagés dans le fond 10c de la chemise 10.
De même, l'extrémité inférieure de l'obturateur 16 du circuit d'air C2 se situe au-dessus de l'orifice aval 19b du canal 19, autorisant l'évacuation de l'eau éventuellement présente dans le canal de sortie 18 et dans l'installation en aval de la vanne.

Partant de cette position fermée, pour alimenter en eau et en air l'installation en aval de la vanne, les moyens de commande 3 manoeuvrent les obturateurs 6 et 16 en direction de l'extrémité inférieure 5b et 15b de leur chambre respective 5 et 15.

Avant l'ouverture du circuit d'eau C1, la structure particulière de la vanne 1 permet l'obtention de différentes positions de sécurité et de mise en route.

L'une de ces positions assure en particulier une purge active de la conduite d'alimentation en air, évitant notamment que l'eau éventuellement présente dans cette conduite parvienne jusqu'au dispositif de pulvérisation en aval (la présence d'eau entraînant un risque de gel de certaines parties du dispositif de pulvérisation, notamment des nucléateurs). Cette action est optimisée par la forme en chicane du canal de sortie 18.

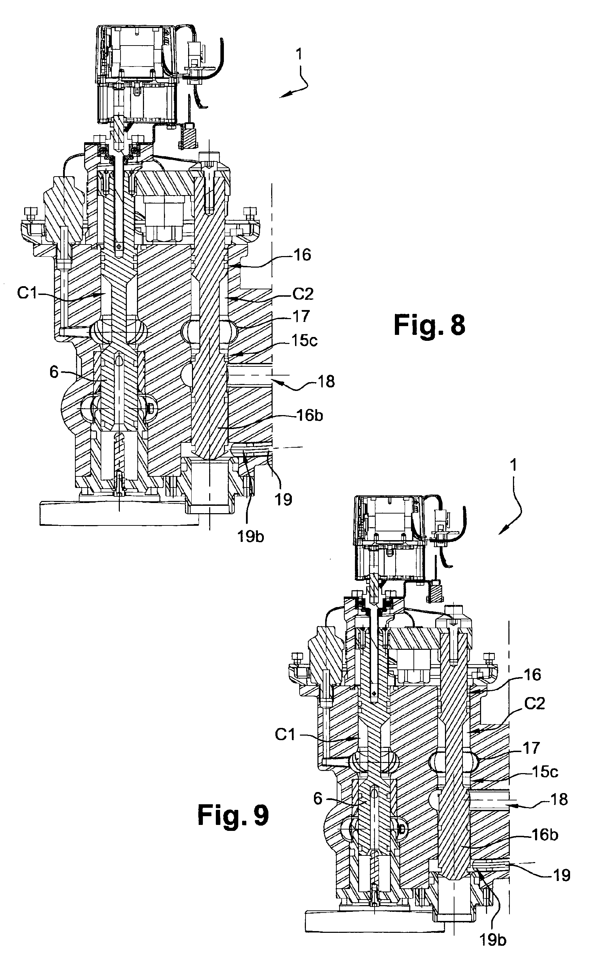

Ainsi, tel que représenté sur les figures 8 et 9, la structure de la vanne 1 autorise une manoeuvre des obturateurs 6 et 16 selon une première configuration intermédiaire dans laquelle :
- l'obturateur 6 est toujours dans une position de fermeture du circuit d'eau C1, et
- l'obturateur 16 du circuit d'air C2 prend une position dite intermédiaire, située entre les positions fermée et ouverte.

Dans cette position intermédiaire, le circuit d'air C2 présente la configuration suivante :
- d'une part, le canal d'entrée 17 vient en communication avec le canal de sortie 18 via la zone intermédiaire de chambre 15c, cette dernière étant au moins partiellement libérée par la partie inférieure 16b de l'obturateur 16 (l'orifice amont 18a du canal de sortie 18 est partiellement ouvert), et
- d'autre part, l'orifice aval 19b du canal 19 conserve une position ouverte (il n'est pas fermé par l'obturateur 16).

L'air sous pression, provenant du canal d'entrée 17, circule alors à la fois vers l'orifice aval 18b du canal de sortie 18 et au travers du canal 19 ; et on obtient une purge de la canalisation d'air en aval de la vanne.
L'eau éventuellement présente dans l'air est évacuée activement par le canal 19 (c'est pourquoi ce canal est dénommé canal de purge/vidange). On évite ainsi les problèmes de colmatage des dispositifs de pulvérisation en aval, par de l'eau sous forme solide.

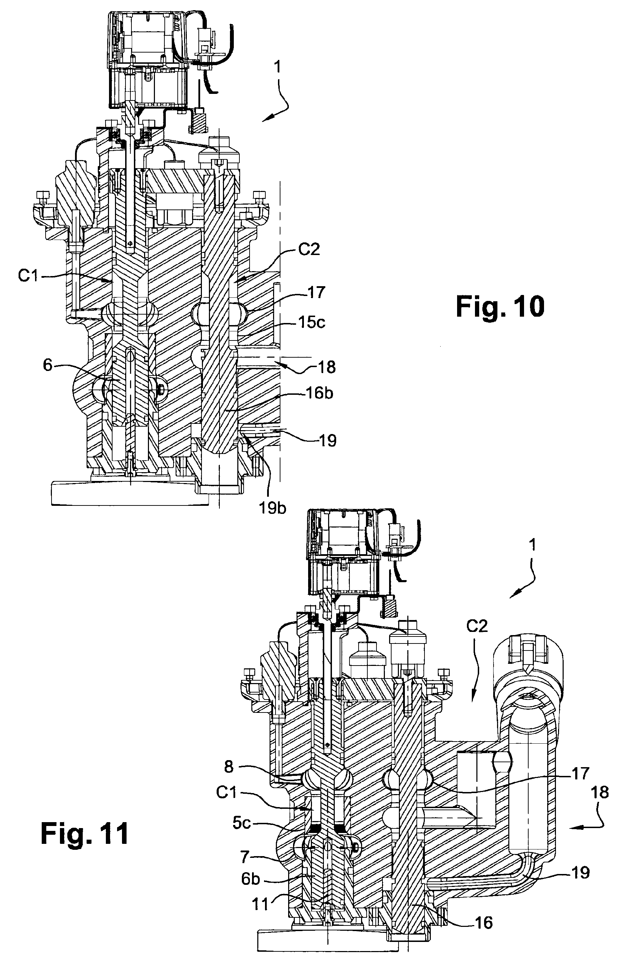

La poursuite de la manoeuvre des obturateurs 6 et 16 en direction de leurs positions ouvertes respectives aboutit à une seconde configuration intermédiaire, tel que représenté sur la figure 10, dans laquelle :
- l'obturateur 16 du circuit d'air C2 est toujours dans sa position ouverte (communication entre le canal d'entrée 17 et le canal de sortie 18 via la zone intermédiaire 15c de la chambre 15), mais avec un canal de purge/vidange 19 (et en particulier son extrémité aval 19b) maintenant obturé par la partie inférieure cylindrique 16b de l'obturateur 16, et
- l'obturateur 6 maintient le circuit d'eau C1 dans sa position fermée.
Ainsi, le circuit d'air de l'enneigeur est mis en pression avant l'arrivée d'eau évitant tout retour d'eau par d'éventuelles chambres de mélange.

Ensuite, tel que représenté sur la figure 11, l'obturateur 6 du circuit d'eau C1 atteint également sa position ouverte dans laquelle sa partie cylindrique inférieure 6b libère l'orifice aval 7b du canal d'alimentation 7.

Dans cette position et au niveau du circuit d'eau C1, le canal d'entrée 7 est en communication avec le canal de sortie 8 via la zone intermédiaire de chambre 5c, et le canal de vidange 9 est obturé par le bouchon 11.

Lorsque l'alimentation des dispositifs de pulvérisation doit être interrompue, les obturateurs 6 et 16 sont manoeuvrés dans un sens inverse, de sorte à assurer leur retour en position fermée tel que représenté sur la figure 5.

Lors de ce retour en position fermée, le circuit d'eau C1 se referme avant le circuit d'air C2, ce qui permet un nettoyage et une purge de l'eau située au niveau du dispositif de pulvérisation en aval.

Dans la position finale fermée, après fonctionnement, les deux circuits C1 et C2 font l'objet d'une vidange automatique, l'eau s'évacuant par gravité au travers des canaux 9 et 19 respectifs en position ouverte.

Dans une variante de réalisation non représentée, le circuit d'eau C1 est équipé d'un canal de sortie identique ou similaire à celui équipant le circuit d'air C2.
Dans ce cas, une position intermédiaire de l'obturateur du circuit d'eau permet la purge du circuit amont, notamment l'élimination de l'air contenu dans l'eau, par exemple lors du remplissage de la canalisation d'eau.
Cette position intermédiaire de purge du circuit d'eau sera avantageusement atteinte avant la position de purge du circuit d'air, en particulier pour permettre d'intervenir sur le circuit amont d'eau sans consommer d'air.
Ces opérations de purge sur l'eau et sur l'air sont suivies de l'ouverture du circuit d'air, puis de l'ouverture du circuit d'eau (comme présenté ci-dessus).

Ainsi, la vanne permet l'élimination de l'air contenu dans les canalisations d'eau, susceptible de perturber la régulation de pression.
Une telle vanne permet de limiter l'usage d'organes dédiés à cette fonction d'élimination d'air ; il conviendra alors d'assurer un contrôle approprié de la motorisation et des séquences mises en oeuvre.

D'une manière générale, ces moyens de purge sur le circuit d'eau peuvent être prévus indépendamment de la présence des moyens de purge sur le circuit d'air.
D'autre part, les moyens de purge sur le circuit d'air et ceux sur le circuit d'eau peuvent être prévus indépendants des canaux assurant la vidange (au moyen de canaux ou d'orifices dédiés ménagés dans le corps de vanne, coopérant de manière appropriée avec l'obturateur 6 et/ou 16 associé).

## Revendications

1. Vanne pour la distribution d'eau et d'air, dans les installations de pulvérisation d'eau sous pression en vue de la fabrication de neige artificielle par exemple, laquelle vanne (1) est **caractérisée en ce qu'**elle comprend :
d'une part, un corps (2) comprenant deux circuits indépendants (C1, C2) pour la circulation chacun d'un fluide, l'un d'air et l'autre d'eau, lesquels circuits (C1, C2) comportent chacun (i) une chambre (5, 15) dans laquelle est logé un obturateur (6, 16) en forme de tiroir, (ii) un canal (7, 17) pour l'entrée du fluide, entrant dans ledit corps (2) par un orifice amont (7a, 17a) et connecté à ladite chambre (5, 15) par un orifice aval (7b, 17b), (iii) un canal (8, 18) pour la sortie du fluide, connecté à ladite chambre (5, 15) par un orifice amont (8a, 18a) et débouchant dudit corps (2) par un orifice aval (8b, 18b), et (iv) un canal (9, 19) en communication avec ledit canal de sortie (8, 18) ou apte à venir en communication avec ce dernier, muni d'un orifice amont (9a, 19a) et débouchant par un orifice aval (9b, 19b), afin de permettre la vidange du fluide contenu dans ledit canal de sortie (8, 18),
et d'autre part, des moyens pour la commande desdits obturateurs (6, 16) disposés et guidés dans leur chambre respective (5, 15), chacun entre :
- une position ouverte, dans laquelle ledit canal d'entrée (7, 17) est en communication avec ledit canal de sortie (8, 18) via une zone de passage de ladite chambre (5c, 15c), et dans laquelle ledit canal de vidange (9, 19) est obturé, et
- une position fermée, dans laquelle ladite zone de passage (5c, 15c) est obturée par ledit obturateur associé (6, 16), et dans laquelle le canal de vidange (9, 19) est ouvert,
et **en ce que** lesdits moyens de commande comportent - une motorisation unique (25), pour la manoeuvre desdits obturateurs (6, 16), et - une structure (26) assurant la liaison mécanique entre les deux obturateurs (6, 16), pour assurer une manoeuvre simultanée desdits deux obturateurs (6, 16) au sein de leur chambre respective (5, 15).

2. Vanne selon la revendication 1, **caractérisée en ce que** la motorisation (3) coopère avec l'un des obturateurs (6), et **en ce que** la structure de liaison (26) relie mécaniquement l'extrémité supérieure (6a, 16a) des deux obturateurs (6, 16) pour assurer leurs manoeuvres simultanées.

3. Vanne selon l'une quelconque des revendications 1 ou 2, **caractérisée en ce qu'**elle est structurée de sorte que les obturateurs (6, 16) sont aptes à être manoeuvrés selon une configuration dans laquelle l'obturateur du circuit d'air (6) se situe dans sa position ouverte alors que l'obturateur du circuit d'eau (16) est dans sa position fermée.

4. Vanne selon l'une quelconque des revendications 1 à 3, **caractérisée en ce qu'**elle est structurée de sorte que la manoeuvre des obturateurs (6, 16) en position ouverte permet de réguler le débit et de contrôler la pression d'au moins l'un des fluides.

5. Vanne selon l'une quelconque des revendications 1 à 4, **caractérisée en ce qu'**elle comporte un canal (19) sur son circuit d'air (C2) et/ou un canal sur son circuit d'eau (C1), apte(s) à coopérer avec l'obturateur (6, 16) du circuit correspondant (C1, C2) pour réaliser une purge de l'eau dans l'air, ou de l'air dans l'eau, selon le cas, des canalisations amont, avant de réaliser l'ouverture desdits circuits d'air et/ou d'eau (C1, C2).

6. Vanne selon l'une quelconque des revendications 1 à 5, **caractérisée en ce que** le canal de vidange (19) du circuit d'air (C2) est ménagé dans le corps de vanne (2), en dehors de l'encombrement de la chambre associée (15), de sorte que son orifice amont (19a) débouche dans le canal de sortie (18) dudit circuit d'air (C2), et que son orifice aval (19b) débouche au niveau de l'extrémité inférieure (15b) de ladite chambre (15), et **en ce que** l'obturateur (16) dudit circuit d'air (C2) est manoeuvrable par les moyens de commande dans une position intermédiaire, située entre les positions fermée et ouverte, dans laquelle, d'une part, ledit canal d'entrée (17) est en communication avec le canal de sortie (18) via la zone de passage (15c) de la chambre associée (15) et, d'autre part, le canal de vidange (19) est ouvert, pour permettre en particulier une opération active de purge du circuit d'air (C2) lors de l'ouverture dudit circuit d'air.

7. Vanne selon l'une quelconque des revendications 1 à 6, **caractérisée en ce que** le canal de sortie (18) du circuit d'air (C2) comporte une partie formant chicane, comportant une chambre (20) en deux parties, l'une amont (20a) et l'autre aval (20b), séparées par une cloison transversale (20c) munie d'un orifice traversant (20c1) décalé vers le haut par rapport à l'orifice d'entrée (20a1) de ladite partie amont (20a), laquelle partie aval (20b) de la chambre (20) se prolonge, en partie haute, par l'orifice aval (18b) du circuit d'air (C2) et comporte, en partie basse, l'orifice amont (19a) du canal de purge/vidange (19).

8. Vanne selon l'une quelconque des revendications 1 à 7, **caractérisée en ce que** le canal de vidange (9) du circuit d'eau (C1) est ménagé dans l'obturateur (6) dudit circuit d'eau (C1), au niveau de son extrémité inférieure, lequel canal de vidange (9) comporte un orifice aval (9b) débouchant en regard de l'extrémité inférieure (5b) de la chambre associée (5), et un orifice amont (9a) débouchant dans la zone de passage de fluide (5c) de ladite chambre (5), lequel canal de vidange (9) est ouvert ou fermé, selon la position dudit obturateur (6), au moyen d'un bouchon (11) ménagé au niveau de l'extrémité inférieure (5b) de ladite chambre (5).

9. Vanne selon l'une quelconque des revendications 1 à 8, **caractérisée en ce que**, pour le circuit d'eau (C1), l'orifice aval (7b) du canal d'entrée (7) se situe au-dessous de l'orifice amont (8a) du canal de sortie (8), et pour le circuit d'air (C2), l'orifice aval (17b) du canal d'entrée (17) se situe au-dessus de l'orifice amont (18a) du canal de sortie (18).

10. Procédé de mise en oeuvre d'au moins une vanne pour la distribution d'eau et d'air dans les installations de pulvérisation d'eau sous pression en vue de la fabrication de neige artificielle par exemple, laquelle ou lesquelles vannes constituent deux circuits de fluide, l'un d'air et l'autre d'eau, et comportent :
d'une part, un corps (2) muni desdits circuits indépendants (C1, C2) pour la circulation chacun d'un fluide, l'un d'air et l'autre d'eau, lesquels circuits (C1, C2) comportent chacun (i) une chambre (5, 15) dans laquelle est logé un obturateur (6, 16) en forme de tiroir, (ii) un canal (7, 17) pour l'entrée du fluide, entrant dans ledit corps (2) par un orifice amont (7a, 17a) et connecté à ladite chambre (5, 15) par un orifice aval (7b, 17b), (iii) un canal (8, 18) pour la sortie du fluide, connecté à ladite chambre (5, 15) par un orifice amont (8a, 18a) et débouchant dudit corps (2) par un orifice aval (8b, 18b), et (iv) un canal pour la vidange (9, 19) en communication avec ledit canal de sortie (8, 18), ou apte à venir en communication avec ce dernier, muni d'un orifice amont (9a, 19a) et débouchant par un orifice aval (9b, 19b), afin de permettre notamment la vidange du fluide contenu dans ledit canal de sortie (8, 18),
et d'autre part, des moyens pour la commande desdits obturateurs (6, 16) disposés et guidés dans leur chambre respective (5, 15), chacun entre :
- une position ouverte, dans laquelle ledit canal d'entrée (7, 17) est en communication avec ledit canal de sortie (8, 18) via une zone de passage (5c, 15c) de ladite chambre (5, 15), et dans laquelle ledit canal de vidange (9, 19) est obturé, et
- une position fermée, dans laquelle ladite zone de passage (5c, 15c) est obturée par ledit obturateur (6, 16) associé, et dans laquelle le canal de vidange (9, 19) est ouvert,
lesdits obturateurs (6, 16) du circuit d'air (C1) et/ou du circuit d'eau (C2) étant également manoeuvrables dans une position intermédiaire, située entre lesdites positions fermée et ouverte, dans laquelle, d'une part, le canal d'entrée (7, 17) est en communication avec le canal de sortie (8, 18) via ladite zone de passage (5c, 15c) de ladite chambre (5, 15) associée et, d'autre part, le canal de vidange (9, 19) est ouvert,
lequel procédé consiste à mettre en oeuvre la succession d'étapes suivantes, partant d'une position fermée pour les deux circuits de fluide (C1, C2) :
a) déplacement en position intermédiaire de l'un au moins desdits obturateurs (6, 16), pour réaliser une purge du circuit (C1, C2) correspondant,
b) déplacement en position ouverte uniquement de l'obturateur (16) du circuit d'air (C2), pour assurer l'alimentation en air, et ensuite
c) déplacement en position ouverte de l'obturateur (6) du circuit d'eau (C1), pour assurer l'alimentation en eau,
lesquelles étapes sont mises en oeuvre selon un ordre inversé pour assurer le retour en position fermée desdits deux obturateurs (6, 16), lors de l'arrêt de l'alimentation en eau et en air.

11. Procédé selon la revendication 10, **caractérisé en ce que** les obturateurs (6, 16) du circuit d'air (C2) et du circuit d'eau (C1) sont manoeuvrables dans une position intermédiaire pour réaliser une purge des deux circuits, et **en ce que** ladite position intermédiaire de l'obturateur du circuit d'eau (6) est atteinte avant la position intermédiaire de l'obturateur du circuit d'air (16).

12. Procédé selon l'une quelconque des revendications 10 ou 11, **caractérisé en ce que** la vanne (1) est structurée de sorte que la position des obturateurs (6, 16) permet de réguler le débit et de contrôler la pression en fluide, et **en ce que** la position des obturateurs (6, 16) en configuration ouverte, et le temps de maintien de ladite position, sont dépendants de la valeur mesurée de pression et/ou de débit en fluide, ou des informations fournies par un capteur de présence d'eau dans le canal de sortie (18).

## Patentansprüche

1. Ventil zur Verteilung von Wasser und Luft für Wassersprühanlagen unter Druck für die Erzeugung von Kunstschnee beispielsweise, wobei das Ventil (1) **dadurch gekennzeichnet ist, dass** es Folgendes umfasst:
- einerseits einen Körper (2), umfassend zwei unabhängige Kreisläufe (C1, C2) für die Zirkulation je eines Fluids, einerseits Luft und andererseits Wasser, wobei die Kreisläufe (C1, C2) jeweils (i) eine Kammer (5, 15) umfassen, in der ein Verschlusselement (6, 16) in Form eines Schiebers, (ii) ein Kanal (7, 17) für den Eintritt des Fluids, das in den Körper (2) durch eine stromaufwärtige Öffnung (7a, 17a) eintritt, der an die Kammer (5, 15) durch eine stromabwärtige Öffnung (7b, 17b) angeschlossen ist, (iii) ein Kanal (8, 18) für den Austritt des Fluids, der an die Kammer (5, 15) durch eine stromaufwärtige Öffnung (8a, 18a) angeschlossen ist und vom Körper (2) durch eine stromabwärtige Öffnung (8b, 18b) mündet, und (iv) ein Kanal (9, 19) angeordnet sind, der mit dem Austrittskanal (8, 18) in Verbindung steht oder geeignet ist, mit diesem letztgenannten in Verbindung zu kommen, und der mit einer stromaufwärtigen Öffnung (9a, 19a) versehen ist und durch eine stromabwärtige Öffnung (9b, 19b) mündet, um die Entleerung des in dem Austrittskanal (8, 18) enthaltenen Fluids zu ermöglichen,
- und andererseits Mittel zur Steuerung der Verschlusselemente (6, 16), die in ihrer jeweiligen Kammer (5, 15) angeordnet und jeweils geführt werden zwischen:
- einer offenen Position, in der der Eintrittskanal (7, 17) mit dem Austrittskanal (8, 18) über eine Durchgangszone der Kammer (5c, 15c) in Verbindung steht, und in der der Entleerungskanal (9, 19) verschlossen ist, und
- einer geschlossenen Position, in der die Durchgangszone (5c, 15c) durch das zugehörige Verschlusselement (6, 16) verschlossen ist, und in der der Entleerungskanal (9, 19) offen ist,
und dass die Steuermittel Folgendes umfassen: - eine einzige Motorisierung (25) für die Betätigung der Verschlusselemente (6, 16), und - eine Struktur (26), die die machanische Verbindung zwischen den beiden Verschlusselementen (6, 16) gewährleistet, um eine gleichzeitige Betätigung der beiden Verschlusselemente (6, 16) innerhalb ihrer jeweiligen Kammer (5, 15) zu gewährleisten.

2. Ventil nach Anspruch 1, **dadurch gekennzeichnet, dass** die Motorisierung (3) mit einem der Verschlusselemente (6) zusammenwirkt, und dass die Verbindungsstruktur (26) das obere Ende (6a, 16a) der beiden Verschlusselemente (6, 16) mechanisch verbindet, um ihre gleichzeitigen Betätigungen zu gewährleisten.

3. Ventil nach einem der Ansprüche 1 oder 2, **dadurch gekennzeichnet, dass** es derart strukturiert ist, dass die Verschlusselemente (6, 16) geeignet sind, nach einer Konfiguration betätigt zu werden, bei der das Verschlusselement des Luftkreislaufs (6) in seiner offenen Position angeordnet ist, während sich das Verschlusselement des Wasserkreislaufs (16) in seiner geschlossenen Position befindet.

4. Ventil nach einem der Ansprüche 1 bis 3, **dadurch gekennzeichnet, dass** es derart strukturiert ist, dass die Betätigung der Verschlusselemente (6, 16) in der offenen Position es ermöglicht, die Durchflussmenge zu regeln und den Druck mindestens eines der Fluide zu kontrollieren.

5. Ventil nach einem der Ansprüche 1 bis 4, **dadurch gekennzeichnet, dass** es einen Kanal (19) auf seinem Luftkreislauf (C2) und/oder einen Kanal auf seinem Wasserkreislauf (C1) umfasst, der (die) geeignet ist (sind), mit dem Verschlusselement (6, 16) des entsprechenden Kreislaufs (C1, C2) zusammenzuwirken, um eine Reinigung des Wassers in der Luft oder der Luft im Wasser, je nach Fall, der stromaufwärtigen Kanalisationen vorzunehmen, bevor das Öffnen der Luft- und/oder Wasserkreisläufe (C1, C2) erfolgt.

6. Ventil nach einem der Ansprüche 1 bis 5, **dadurch gekennzeichnet, dass** der Entleerungskanal (19) des Luftkreislaufs (C2) in dem Ventilkörper (2) außerhalb des Platzbedarfs der zugehörigen Kammer (15) ausgenommen ist, so dass seine stromaufwärtige Öffnung (19a) in den Austrittskanal (18) des Luftkreislaufs (C2) mündet, und dass seine stromabwärtige Öffnung (19b) im Bereich des unteren Endes (15b) der Kammer (15) mündet, und dass das Verschlusselement (16) des Luftkreislaufs (C2) durch die Steuermittel in eine Zwischenposition gebracht werden kann, die sich zwischen der geschlossenen und der offenen Position befindet, in der einerseits der Eintrittskanal (17) mit dem Austrittskanal (18) über eine Durchgangszone (15c) der zugehörigen Kammer (15) in Verbindung steht, und andererseits der Entleerungskanal (19) offen ist, um insbesondere einen aktiven Reinigungsvorgang des Luftkreislaufs (C2) beim Öffnen des Luftkreislaufs zu ermöglichen.

7. Ventil nach einem der Ansprüche 1 bis 6, **dadurch gekennzeichnet, dass** der Austrittskanal (18) des Luftkreislaufs (C2) einen ein Ablenkblech bildenden Teil aufweist, umfassend eine Kammer (20) in zwei Teilen, einem stromaufwärtigen (20a) und einem stromabwärtigen (20b), die durch eine quer verlaufende Trennwand (20c) getrennt sind, die mit einer Durchgangsöffnung (20c1) versehen ist, die nach oben in Bezug zur Eintrittsöffnung (20a1) des stromaufwärtigen Teils (20a) versetzt ist, wobei sich der stromabwärtige Teil (20b) der Kammer (20) im oberen Teil durch die stromabwärtige Öffnung (18b) des Luftkreislaufs (C2) verlängert und im unteren Teil die stromaufwärtige Öffnung (19a) des Reinigungs-/Entleerungskanals (19) umfasst.

8. Ventil nach einem der Ansprüche 1 bis 7, **dadurch gekennzeichnet, dass** der Entleerungskanal (9) des Wasserkreislaufs (C1) in dem Verschlusselement (6) des Wasserkreislaufs (C1) im Bereich seines unteren Endes ausgenommen ist, wobei der Entleerungskanal (9) eine stromabwärtige Öffnung (9b), die gegenüber dem unteren Ende (5b) der zugehörigen Kammer (5) mündet, und eine stromaufwärtige Öffnung (9a) umfasst, die in der Fluiddurchgangszone (5c) der Kammer (5) mündet, wobei der Entleerungskanal (9) je nach der Position des Verschlusselements (6) mit Hilfe eines Stöpsels (11) der im Bereich des unteren Endes (5b) der Kammer (5) vorgesehen ist, geöffnet oder verschlossen wird.

9. Ventil nach einem der Ansprüche 1 bis 8, **dadurch gekennzeichnet, dass** sich für den Wasserkreislauf (C1) die stromabwärtige Öffnung (7b) des Eintrittskanals (7) unter der stromaufwärtigen Öffnung (8a) des Austrittskanals (8) befindet, und sich für den Luftkreislauf (C2) die stromabwärtige Öffnung (17b) des Eintrittskanals (17) über der stromaufwärtigen Öffnung (18a) des Austrittskanals (18) befindet.

10. Verfahren für den Einsatz mindestens eines Ventils zur Verteilung von Wasser und Luft in Wassersprühanlagen unter Druck für die Erzeugung von Kunstschnee beispielsweise, wobei das oder die Ventile zwei Fluidkreisläufe, einerseits von Luft und andererseits von Wasser, bilden und Folgendes umfassen:
- einerseits einen Körper (2), umfassend unabhängige Kreisläufe (C1, C2) für die Zirkulation je eines Fluids, einerseits Luft und andererseits Wasser, wobei die Kreisläufe (C1, C2) jeweils (i) eine Kammer (5, 15) umfassen, in der ein Verschlusselement (6, 16) in Form eines Schiebers, (ii) ein Kanal (7, 17) für den Eintritt des Fluids, das in den Körper (2) durch eine stromaufwärtige Öffnung (7a, 17a) eintritt, der an die Kammer (5, 15) durch eine stromabwärtige Öffnung (7b, 17b) angeschlossen ist, (iii) ein Kanal (8, 18) für den Austritt des Fluids, der an die Kammer (5, 15) durch eine stromaufwärtige Öffnung (8a, 18a) angeschlossen ist und vom Körper (2) durch eine stromabwärtige Öffnung (8b, 18b) mündet, und (iv) ein Kanal (9, 19) angeordnet sind, der mit dem Austrittskanal (8, 18) in Verbindung steht oder geeignet ist, mit diesem letztgenannten in Verbindung zu kommen, und der mit einer stromaufwärtigen Öffnung (9a, 19a) versehen ist und durch eine stromabwärtige Öffnung (9b, 19b) mündet, um die Entleerung des in dem Austrittskanal (8, 18) enthaltenen Fluids zu ermöglichen,
- und andererseits Mittel zur Steuerung der Verschlusselemente (6, 16), die in ihrer jeweiligen Kammer (5, 15) angeordnet und jeweils geführt werden zwischen:
- einer offenen Position, in der der Eintrittskanal (7, 17) mit dem Austrittskanal (8, 18) über eine Durchgangszone der Kammer (5c, 15c) in Verbindung steht, und in der der Entleerungskanal (9, 19) verschlossen ist, und
- einer geschlossenen Position, in der die Durchgangszone (5c, 15c) durch das zugehörige Verschlusselement (6, 16) verschlossen ist, und in der der Entleerungskanal offen ist,
wobei die Verschlusselemente (6, 16) des Luftkreislaufs (C1) und/oder des Wasserkreislaufs (C2) auch in eine Zwischenposition gebracht werden können, die sich zwischen der geschlossenen und der offenen Position befindet, in der einerseits der Eintrittskanal (7, 17) mit dem Austrittskanal (8, 18) über die Durchgangszone (5c, 15c) der zugehörigen Kammer (5, 15) in Verbindung steht und andererseits der Entleerungskanal (9, 19) offen ist,
wobei das Verfahren darin besteht, die folgenden Schritte nacheinander durchzuführen, ausgehend von einer geschlossenen Position für die beiden Fluidkreisläufe (C1, C2):
a) Verschieben mindestens eines der Verschlusselemente (6, 16) in eine Zwischenposition, um eine Reinigung des entsprechenden Kreislaufs (C1, C2) vorzunehmen,
b) Verschieben nur des Verschlusselements (16) des Luftkreislaufs (C2) in die offene Position, um die Luftversorgung zu gewährleisten, und dann
c) Verschieben des Verschlusselements (6) des Wasserkreislaufs (C1) in die offene Position, um die Wasserversorgung zu gewährleisten,
wobei die Schritte in umgekehrter Reihenfolge eingesetzt werden, um die Rückkehr der beiden Verschlusselemente (6, 16) bei Einstellung der Wasser- und Luftversorgung in die geschlossene Position zu gewährleisten.

11. Verfahren nach Anspruch 10, **dadurch gekennzeichnet, dass** die Verschlusselemente (6, 16) des Luftkreislaufs (C2) und des Wasserkreislaufs (C1) in eine Zwischenposition gebracht werden können, um eine Reinigung der beiden Kreisläufe vorzunehmen, und dass die Zwischenposition des Verschlusselements des Wasserkreislaufs (6) vor der Zwischenposition des Verschlusselements des Luftkreislaufs (16) erreicht wird.

12. Verfahren nach einem der Ansprüche 10 oder 11, **dadurch gekennzeichnet, dass** das Ventil (1) derart strukturiert ist, dass es die Position der Verschlusselemente (6, 16) ermöglicht, die Durchflussmenge zu regeln und den Fluiddruck zu kontrollieren, und dass die Position der Verschlusselemente (6, 16) in offener Ausführung und die Zeit der Beibehaltung dieser Position vom gemessenen Wert des Drucks und/oder der Fluidmenge oder von den Informationen abhängen, die von einem Sensor für das Vorhandensein von Wasser in dem Austrittskanal (18) geliefert werden.

## Claims

1. A valve for dispensing water and air, in installations for spraying water under pressure, for example for making artificial snow, which valve (1) is **characterized in that** it comprises:
firstly, a body (2) provided with two independent circuits (C1, C2), each of which enables a respective fluid to flow through it, one air and the other water, each of said circuits (C1, C2) comprising (i) a chamber (5, 15) in which a closure member (6, 16) in the form of a slide is received, (ii) a fluid inlet channel (7, 17) that enables the fluid to enter said body (2) via an upstream orifice (7a, 17a), and that is connected to said chamber (5, 15) via a downstream orifice (7b, 17b), (iii) a fluid outlet channel (8, 18) that enables the fluid to exit, that is connected to said chamber (5, 15) via an upstream orifice (8a, 18a), and that opens out from said body (2) via a downstream orifice (8b, 18b), and (iv) a channel (9, 19) in communication with said outlet channel (8, 18) or suitable for coming into communication therewith, provided with an upstream orifice (9a, 19a) and opening out via a downstream orifice (9b, 19b), in order to enable the fluid contained in said outlet channel (8, 18) to be emptied;
and secondly, means for controlling said closure members (6, 16) as disposed and guided in their respective chambers (5, 15), so as to cause each of them to go between:
· an open position, in which said inlet channel (7, 17) is in communication with said outlet channel (8, 18) via a through zone of said chamber (5c, 15c), and in which said emptying channel (9, 19) is closed off; and
· a closed position, in which said through zone (5c, 15c) is closed off by said associated closure member (6, 16), and in which the emptying channel (9, 19) is open;
and **in that** said control means comprise: - a single motor-drive unit (25) for driving said closure members (6, 16); and - a structure (26) for mechanically coupling together the two closure members (6, 16) so as to ensure that said two closure members (6, 16) are driven simultaneously within their respective chambers (5, 15).

2. A valve according to claim 1, **characterized in that** the motor-drive unit (3) cooperates with one of the closure members (6), and **in that** the coupling structure (26) mechanically interconnects the top ends (6a, 16a) of the two closure members (6, 16) so as to ensure that they are driven simultaneously.

3. A valve according to claim 1 or 2, **characterized in that** it is structured so that the closure members (6, 16) are suitable for being driven into a configuration in which the closure member of the air circuit (6) is situated in its open position while the closure member of the water circuit (16) is in its closed position.

4. A valve according to any one of claims 1 to 3, **characterized in that** it is structured so that driving the closure members (6, 16) into the open position makes it possible to regulate the flow rate and to control the pressure of at least one of the fluids.

5. A valve according to any one of claims 1 to 4, **characterized in that** it includes a channel (19) in its air circuit (C2) and/or a channel in its water circuit (C1), which channel is suitable for co-operating with the closure member (6, 16) of the corresponding circuit (C1, C2) to bleed water from the air or to bleed air from the water, as applicable, from the upstream pipes, before opening said air and/or water circuits (C1, C2).

6. A valve according to any one of claims 1 to 5, **characterized in that** the emptying channel (19) for the air circuit (C2) is provided in the valve body (2), outside the volume of the associated chamber (15) so that its upstream orifice (19a) opens out into the outlet channel (18) of said air circuit (C2), and so that its downstream orifice (19b) opens out at the bottom end (15b) of said chamber (15), and **in that** the closure member (16) of said air circuit (C2) is drivable by the control means into an intermediate position, situated between the closed position and the open position, in which intermediate position firstly said inlet channel (17) is in communication with the outlet channel (18) via the through zone (15c) of the associated chamber (15) and secondly the emptying channel (19) is open, so as to makes it it possible, in particular, for the air circuit (C2) to be subjected to an active bleed operation on opening said air circuit.

7. A valve according to any one of claims 1 to 6, **characterized in that** the outlet channel (18) of the air circuit (C2) has a baffle-forming portion, including a chamber (20) in two portions, namely an upstream portion (20a) and a downstream portion (20b), separated by a transverse partition (20c) provided with a through orifice (20c1) offset upwards relative to the inlet orifice (20a1) of said upstream portion (20a), which downstream portion (20b) of the chamber (20) is extended at the top via the downstream orifice (18b) of the air circuit (C2) and, at the bottom, is provided with the upstream orifice (19a) of the bleed/emptying channel (19).

8. A valve according to any one of claims 1 to 7, **characterized in that** the emptying channel (9) of the water circuit (C1) is provided in the closure member (6) of said water circuit (C1), at its bottom end, which emptying channel (9) comprises a downstream orifice (9b) opening out facing the bottom end (5b) of the associated chamber (5), and an upstream orifice (9a) opening out into the fluid through zone (5c) of said chamber (5), which emptying channel (9) is opened or closed, depending on the position of said closure member (6), by means of a plug (11) provided at the bottom end (5b) of said chamber (5).

9. A valve according to any one of claims 1 to 8, **characterized in that**, for the water circuit (C1), the downstream orifice (7b) of the inlet channel (7) is situated below the upstream orifice (8a) of the outlet channel (8), and for the air circuit (C2), the downstream orifice (17b) of the inlet channel (17) is situated above the upstream orifice (18a) of the outlet channel (18).

10. A method of operating at least one valve for dispensing water and air, in installations for spraying water under pressure, e.g. with a view to making artificial snow, which valve or each of which valves constitutes two fluid circuits, one for air and the other for water, and comprises:
firstly, a body (2) provided with said independent circuits (C1, C2), each of which enables a respective fluid to flow through it, one air and the other water, each of which circuits (C1, C2) includes (i) a chamber (5, 15) in which closure member (6, 16) in the form of a slide is received, (ii) a fluid inlet channel (7, 17) that enables the fluid to enter said body (2) via an upstream orifice (7a, 17a), and that is connected to said chamber (5, 15) via a downstream orifice (7b, 17b), (iii) a fluid outlet channel (8, 18) that enables the fluid to exit, that is connected to said chamber (5, 15) via an upstream orifice (8a, 18a), and that opens out from said body (2) via a downstream orifice (8b, 18b), and (iv) an emptying channel (9, 19) in communication with said outlet channel (8, 18) or suitable for coming into communication therewith, provided with an upstream orifice (9a, 19a) and opening out via a downstream orifice (9b, 19b), in order to enable the fluid contained in said outlet channel (8, 18) to be emptied;
and secondly, means for controlling said closure members (6, 16) as disposed and guided in their respective chambers (5, 15), so as to cause each of them to go between:
· an open position, in which said inlet channel (7, 17) is in communication with said outlet channel (8, 18) via a through zone (5c, 15c) of said chamber (5, 15), and in which said emptying channel (9, 19) is closed off; and
· a closed position, in which said through zone (5c, 15c) is closed off by said associated closure member (6, 16), and in which the emptying channel (9, 19) is open;
said closure members (6, 16) of the air circuit (C2) and/or of the water circuit (C1) also being drivable into an intermediate position, situated between the closed position and the open position, in which intermediate position firstly said inlet channel (7, 17) is in communication with the outlet channel (8, 18) via said through zone (5c, 15c) of said associated chamber (5, 15) and secondly the emptying channel (9, 19) is open;
which method consists in implementing the following steps in succession, starting from a closed position for the two fluid circuits (C1, C2):
a) moving at least one of said closure members (6, 16) into the intermediate position so as to bleed the corresponding circuit (C1, C2);
b) moving the closure member (16) of the air circuit (C2) only into the open position so as feed said circuit with air; and then
c) moving the closure member (6) of the water circuit (C1) into the open position so as feed said circuit with water;
which steps are implemented in reverse order for returning said two closure members (6, 16) to the closed position when water and air cease to be supplied.

11. A method according to claim 10, **characterized in that** the closure members (6, 16) of the air circuit (C2) and of the water circuit (C1) are drivable into an intermediate position so as to bleed the two circuits, and **in that** said intermediate position of the closure member of the water circuit (6) is reached before the intermediate position of the closure member of the air circuit (16).

12. A method according to claim 10 or claim 11, **characterized in that** the valve (1) is structured so that the position of the closure members (6, 16) makes it possible to regulate the fluid flow rate and to control the fluid pressure, and **in that** the position of the closure members (6, 16) in the open configuration, and the time for which said position is maintained, are dependent on the measured value for the fluid pressure and/or for the fluid flow rate, or on informations delivered by a water presence sensor in the outlet channel (18).
